# EUROPEAN PATENT SPECIFICATION

(11) **EP 3 072 224 B1**
(45) Date of publication and mention of the grant of the patent: **06.09.2017**
(21) Application number: 14796131.2
(22) Date of filing: 12.11.2014
(51) Int. Cl.: H02K 23/54, H02K 23/30, H02K 1/14, H02K 1/17, H02K 1/24, H02K 23/04

(54) **AXIAL MAGNETIC FLUX ELECTRIC MOTOR**
AXIALER MAGNETFLUSS-ELEKTROMOTOR
MOTEUR ÉLECTRIQUE À FLUX MAGNÉTIQUE AXIAL

(30) Priority: 22.11.2013 BR 102013030129
(43) Date of publication of application: 28.09.2016
(73) Proprietor: Mahle Behr Gerenciamento Térmico Brasil Ltda., 07400-970 Arujá, SP (BR); Mahle Metal Leve S/A, 13210-877 Jundiaí, SP (BR); Mahle Metal Leve Miba Sinterizados Ltda., 1337-460 Indaiatuba, SP (BR); Höganäs Brasil Ltda., 00810-020 Mogi das Cruzes, SP (BR); Mahle International GmbH, 70376 Stuttgart (DE)
(72) Inventor: KAWAGUCHI, Masaaki, 07400-970 Arujá, SP (BR); MIZUKAMI, Ana Keiko Yasuoka, 13210-877 Jundiai, SP (BR); DUARTES LOPES, Henrique, 02802-120 Sao Paulo, SP (BR); ZALLA, Sandro, 07400-970 Arujá, SP (BR)
(74) Representative: BRP Renaud & Partner mbB Rechtsanwälte Patentanwälte Steuerberater
(86) International application number: PCT/EP2014/074315
(87) International publication number: WO 2015/074919

(56) References cited:
- EP-A1- 2 293 415
- WO-A1-2004/093291
- FR-A- 1 415 057
- JP-A- S61 121 745
- JP-A- 2008 054 489
- JP-A- 2008 245 503
- US-A- 3 489 938

## Description

This invention refers to an axial magnetic flux electric motor; more specifically, a compact and lightweight electric motor to be used in cooling systems for vehicles.

### Description of the present state of the art.

Basically, there are two major kinds of electric motors: direct current motors and alternating current motors.

Regardless of its kind, when employing an electric motor in a given system, it is desirable that the efficiency of such motor is the highest possible, that is to say that the motor has the minimum possible losses. Losses in an electric motor are related to several factors, such as the kind of material used in the production of the rotor assembly, the layout of the electrical parts and the layout of the coils, amongst others.

Each of these above-mentioned factors will interfere with the technical features of the electric motor's operation, for instance in its torque and rotation values, its energy consumption, its noise emissions, in the manner the motor's magnetic flux is displaced and in the motor's ideal operating temperature. Therefore, such technical features of the motor are directly related to its efficiency.

In an ideal perfect motor, such efficiency would be 100%, that is to say the motor would not have any kind of electric and mechanical losses. However, as is known, it is impossible to build an electric motor that has no losses, therefore, depending upon its application, efficiency values between 50% and 55% are already considered acceptable for electric motors.

Among the several applications for an electric motor, this invention focuses on the aspects of electric direct current motors, more specifically, direct current electric motors used in the air conditioning system for motor vehicles.

Basically, cooling systems used in motorcars have the same parts as residential or commercial systems, namely: evaporator, compensator, compressor, expansion valves, filter driers, and obviously an electric motor to drive the compressor.

However, the design, installation and maintenance of air conditioning systems in motorcars present some inconveniences, mainly related to the physical space available to assemble the air conditioning system and therefore for the parts that form the system.

In the specific case of electric motors for the air conditioning system of a motor vehicle, constant studies aim at the reduction of the dimensions of the electric motor and therefore of its weight, with no negative effects to any of its technical features: torque, current, operating temperature, noise emissions, rotation, voltage ripple and efficiency. Obviously, there would be no advantage in an electric motor with extremely reduced dimensions if such a motor could not reach minimum standards of performance and efficiency.

Therefore, it is worth mentioning that the efficiency of an electric motor is directly related to the dimensions of its stator (the fixed part of a motor), and considering that the larger the stator is, the higher will be the density of the magnetic flux that flows through the teeth of the motor.

Further, the dimensions and the material used to produce the rotor assembly (mobile part) of the electric motor are also directly related to the density of the magnetic flux flowing through the teeth of the motor. This way, presently electric motors for such usage are preferably made with magnetic blades; however such motors have such large dimensions that they are not very appropriate for usage in cooling systems for vehicles.

Furthermore, a simple change of the materials with which the rotor assembly is produced has already shown no major benefits in terms of efficiency of electric motors for vehicle air conditioning systems. Therefore, to obtain an efficient motor, it is necessary to change its design.

The electric motors applied in cooling systems for vehicles still present a layout of their parts with which the cylinder containing the rotor magnets and the winding coils are coaxial and therefore the magnetic flux of the motor is radial. Such motors register a high electric current consumption and are not considered as compact as their usages require. Furthermore, such motors have high ripple values (for instance, 9 V. as maximum terminal voltage and 7 V. as minimum) that hinder their functioning.

Moreover, in the present state of the art, known electric motors used in vehicle cooling systems need an electronic command to provide for commutation between the motor's coils, with design and production costs that are too high.

Lastly and as already mentioned, in the present state of the art, the layout of electric motor parts does not provide for a high density of magnetic flux in the motor terminals; compromising the efficiency of the electric motor, and therefore the air conditioning system in which such motor is used, does not work in its best operation setup.

Thus, in the present state of the art there are no known electric motors that may be used in cooling systems for vehicles and are lightweight and compact, with a parts layout and motor operation that provide for high efficiency of the motor and therefore a high density of magnetic flux passing through its terminals.

Furthermore, in the present state of the art there is no electric motor in which the manners the motor coils commute may reduce ripple values for the motor's inducted voltage. WO 2004/093291 A1 discloses a core back for an electrical axial flux machine, said core back being essentially ring shaped, comprises: a plurality of stacked, ring shaped sheets of soft magnetic material, a barrier of electrical resistance arranged between two adjacent sheets of soft magnetic material for reducing effects of eddy currents, wherein each sheet of soft magnetic material in at least a subset of said plurality of stacked, ring shaped sheets of soft magnetic material includes a plurality of circumferentially arranged tooth openings, each tooth opening being at least partially defined by a first tooth engaging portion and a second tooth engaging portion, said tooth openings are extending in a direction substantially parallel with an axial direction of said core back through each said sheets, additionally, each sheet of said subset of said plurality of stacked,ring shaped sheets of soft magnetic material includes a first inner closing portion and a second inner closing portion which are arranged between each tooth opening and an inner perimeter of said ring shaped sheet of soft magnetic material, wherein each first inner closing portion is arranged to face a corresponding second inner closing portion.

EP 2 012 408 A1 discloses an axial flux machine with divided back yokes, which are divided according to each of the teeth.

FR 1 415057 A discloses an axial flux machine comprising yoke teeth with radially inner curved face and radially outer curved face, wherein said faces are concave towards the rotational axis of the electric motor. Furthermore, the document discloses a coil around each of the teeth that comprises analogous to the respective tooth radially inner curved face and radially outer curved face being concave towards the rotational axis of the electric motor.

### Purpose of this invention

The purpose of this invention is to provide an electric motor with axial magnetic flux; such motor would to be used in the electric system of air conditioning for vehicles.

Another purpose of this invention is to provide an electric motor in which the layout of its parts and the material with which they are produced allow for a high density of the magnetic flux in the motor's terminals.

Furthermore, another purpose of this invention is to provide an electric motor to be used in vehicle cooling systems that needs no electronic command for the commutation of the motor's coils, in such a way that the commutation is instead effected by an electrical/mechanical switch.

The purposes of this invention are achieved by means of an axial magnetic flux electric motor according to claim 1.

### Abridged description of the drawings

Further on in this document, this invention will be described in more detail by the execution example presented in drawings. These 12 figures are:
Figure 1 - shows a known electric motor of the present state of the art.
Figure 2 - shows the layout of the parts forming the electric motor described in this invention.
Figure 3 - highlights the stator crown of the electric motor presented in this invention.
Figure 4 - highlights the magnets of the electric motor presented in this invention.
Figure 5 - is a perspective view of the teeth forming part of the electric motor described in this invention.
Figure 6 - is an upper view (a) of the teeth forming part of the electric motor described in this invention and its side view (b).
Figure 7 - is a perspective view of the layout of the copper windings forming part of the electric motor described in this invention.
Figure 8 - is a perspective view of the rotor crown of the electric motor proposed by this invention.
Figure 9 - shows the electric motor with a projection of the supporting parts for the motor.
Figure 10 - shows the electric connexions of the coils of the electric motor proposed in this invention.
Figure 11 - shows a ring switch with twelve blades used in the electric motor proposed by this invention;
Figure 12 - shows an alternative configuration of the electric switch used in the electric motor proposed in this invention.

### Detailed description of the figures

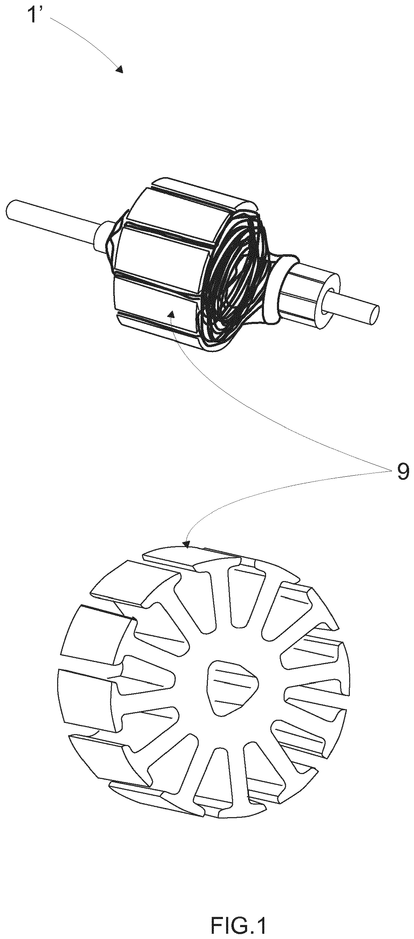

Figure 1 shows the frame (1') of an electric DC motor known in the present state of the art and one of the preferred motors for present cooling systems for vehicles.

The structural configuration of the frame (1'), and mainly the complete layout of the teeth are shown highlighted by number 9 in figure 1; these parts provide for the passage of a magnetic radial flux through the windings of the electric motor. In practical usage, electric motors known in the present state of the art have an efficiency of approximately 54%; such values are considered acceptable.

However, the electric current consumption of these motors equipped with such a frame (1') has proved to be too high, reaching values of approximately 22.53 A. (amperes) which, in some situations, renders their use in such air conditioning electric systems unpractical.

In the following table 1 are shown the results of performance tests of an electric motor equipped with a frame (1') as shown in figure 1.

**Table 1 - Performance tests - present state of the art electric motor**

| Performance tests - Present state of the art electric motor | | | | |
|---|---|---|---|---|
| Voltage (V) | Torque (N.m) | Electric current (A) | Rotation (rpm) | Efficiency (%) |
| 12 | 0.4 | 22.53 | 3508 | 54.4 |

In terms of weight, the electric motor including its frame (1') reaches approximately 900g. This value is considered high, taking into account that the motor is mainly used in air conditioning systems for vehicles, and considering that reduction of vehicle weight today is a strong characteristic trend for automobile manufacturers.

With the aim of increasing the efficiency of the electric motor (1'), as well as reducing its electric current consumption, tests have been carried out on simply changing the production material of the motor's teeth (9). Previously these teeth were produced with several SAE 1006 steel blades, and then later these teeth (9) were produced from a magnetic compound that could be moulded and produced by sintering processes. This compound, after having been compacted at a temperature of approximately 70°C and then further treated at high temperatures to enhance its mechanical and magnetic properties, was used to produce these teeth (9) for the electric motor.

In spite of the expected improvements in the efficiency of the electric motor and a reduction of its electric current consumption, the results of performance tests for electric motors with teeth (9) produced from such a magnetic compound did not confirm these expectations; these results are shown in table 2 below.

**Table 2 - Performance tests - present state of the art electric motor - magnetic compound.**

| Performance tests - Present state of the art electric motor - Magnetic Compound | | | | |
|---|---|---|---|---|
| Voltage (V) | Torque (N.m) | Electric current (A) | Rotation (rpm) | Efficiency (%) |
| 12 | 0.4 | 23.01 | 3634 | 55.1 |

Table 2 illustrates that an electric motor equipped with a frame (1') and with teeth made of this magnetic compound is only 1.3% more efficient than previous electric motors made with SAE 1006 steel. Furthermore, against the expectations, it was noticed that the electric current consumption, as shown in table 2, is 2.1% higher than the previous value shown in table 1 for present state of the art motors.

Therefore, it was concluded that only a change of production material of the motor's teeth (9) would not provide large benefits to the motor's performance, and that to attempt to optimize the electric yield of such motors, a change in their design and the parts forming them would be necessary.

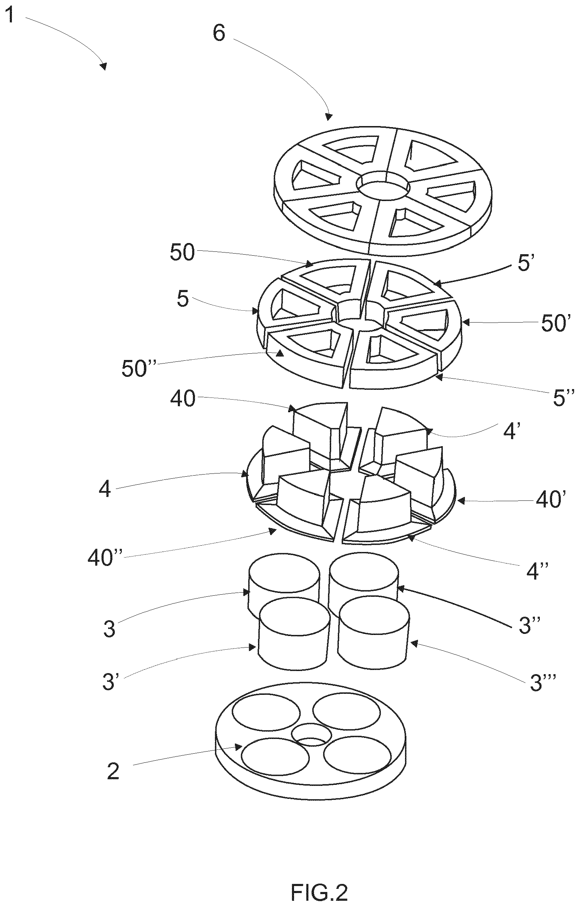

Following that, figure 2 is a visualization of the layout of the parts forming an electric motor (1) in accordance with the improvements of the present invention, namely a magnetic flux electric motor that is axial and not radial as can be seen in figure 1.

As can be seen, in this electric motor (1) is assembled a stator crown (2) basically shaped in a circular manner and produced from a ferrous material (1020 steel). It is worth pointing out that production of the stator crown (2) with 1020 steel should not be considered mandatory for this invention; therefore any other low carbon material could be used instead.

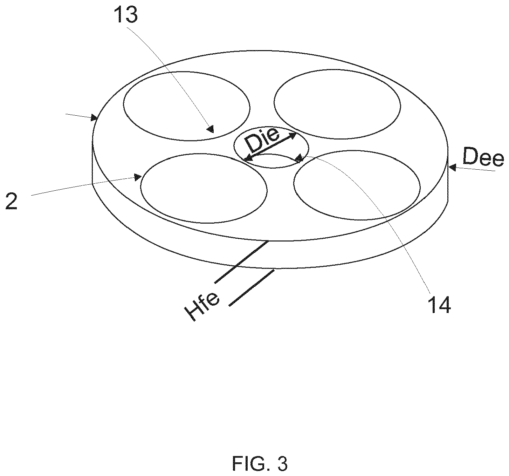

Figure 3 highlights the stator crown (2); it may be noticed that it has a contact surface (13) with a drilled or bored surface (14); this bored surface (14) or its bore, respectively, is shaped in such a manner as to fit the shape of the stator crown (2), that is to say a circular shape.

As for the dimensions of the stator crown (2), these would preferably be 8 millimetres thick (Hfe) (mm) and have a diameter (Dee) of 78mm. Obviously, such measures are just preferred values, therefore a diameter (Dee) within a range of 70mm and 110mm would be considered acceptable. Whereas the bore in the bored surface (14) diameter (Die) is 18mm, again this is just a preferred value and should not be considered as a limiting value.

Continuing the description of the parts that form this electric motor (1), it may be observed in figure 2 that it contains several magnets indicated as (3, 3', 3" and 3"'), all with exactly the same dimensions.

These magnets (3, 3', 3" and 3"') are assembled over the stator crown (2), more specifically, over its surface of contact (13), and therefore the distance from each to the next ones should be the same. For correct assembly of the several magnets (3, 3', 3" and 3"'), and therefore for a more efficient electric motor (1'), these magnets should be assembled in tangent positions in relation to the inner diameter and the outer diameter of the stator crown (2), as shown in figure 2.

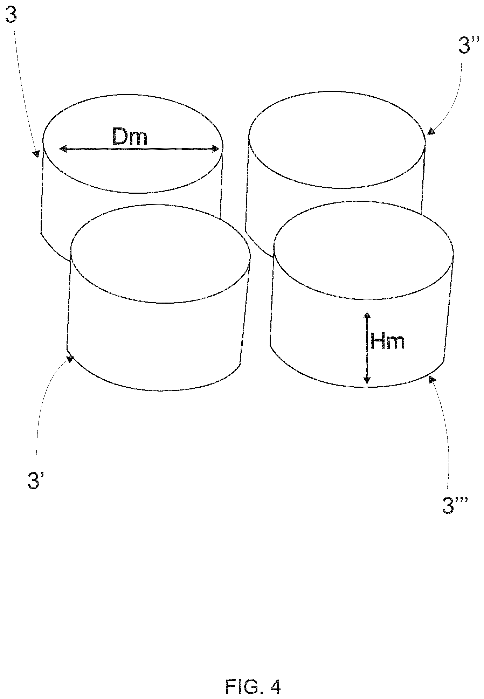

These magnets (3, 3', 3" and 3"') should be produced preferably of Strontium Ferrite, or an equivalent material. The dimensions of such parts are better shown in figure 4; each magnet would preferably measure 30mm in diameter (DM) and 16mm in height (Hm).

In figure 2 it may be seen that also the electric motor (1) proposed in this invention has several teeth; in this preferable embodiment of the motor (1) it is equipped with teeth (4, 40, 4', 40', 4" and 40"). Again, it must be remembered that it is not mandatory to have six teeth for this invention, because a larger or smaller quantity of teeth could also be used.

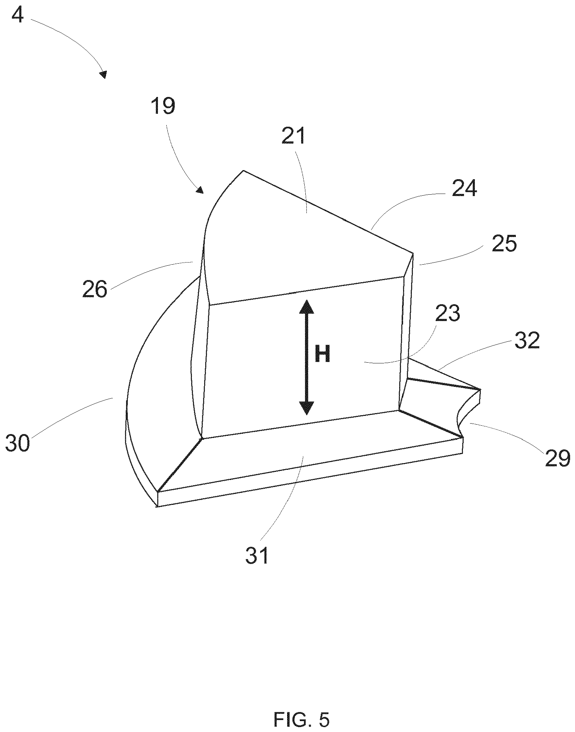

For a better understanding of this invention, in figure 5 one tooth (4) is shown blown up, so its structural configuration and its dimensions become more apparent. It must be remembered that teeth (40, 4', 40', 4" and 40')', not shown in figure 5, should have exactly the same structural configuration and measures as tooth 4.

In figure 5 it may also be seen that tooth 4 has a well defined body (19) which defines a first surface (21) and averted therefrom a second surface (22) (not shown), one parallel to the other. In this preferred configuration of the present invention, the second surface (22) is faced by several magnets (3, 3', 3" and 3"') of the electric motor (1) (figure 2), in a manner that they form a gap of approximately 2 millimetres.

The body (19) of tooth (4) measures H in height (preferably 8mm) so as to fit to a first flat surface (23) and a second flat surface (24). These first and second surfaces (23) and (24) are planar, are converging and are concurrent one to the other. In figure 5 it may be seen that each of the first and the second flat surfaces (23) and (24) extend radially and axially, and are joined to each other by a first or inner curved face (25) and a second or outer curved face (26).

The first and the second curved faces (25) and (26) have radius Rd2 and radius Rd3 respectively, in such a manner that the value of this preferred configuration Rd2 is smaller than Rd3.

Continuing with the structural configuration of tooth (4), in figure 5 it may be seen that from the first curved face (25) and the second curved face (26) are projected a first or inner circumference arc (29) and a second or outer circumference arc (30) respectively. Each of the first and second circumference arcs has radius Rd1 and radius Rd4 respectively.

Furthermore, the first circumference arc (29) is joined to the second circumference arc (30) by a first segment (31) and a second segment (32), in the manner shown in figure 5. The first and second segment (31) and (32) extend radially, are straight and are converging.

In the table below are shown the preferred values for Rd1, Rd2, Rd3 and Rd4 (in millimetres) used in the production of the teeth (4, 40, 4', 40', 4").

**Table 3 - Preferred measures of the teeth - Radius**

| Dimension of teeth (mm) | |
|---|---|
| Rd1 | 9.80 |
| Rd2 | 15.00 |
| Rd3 | 30.90 |
| Rd4 | 35.75 |

It is worth mentioning that, in an additional implementation of tooth (4), it could be as curved as the first and second curved faces (25) and (26), as well as of the first and second circumference arcs (29) and (30) for the side opposite the side indicated in figure 5.

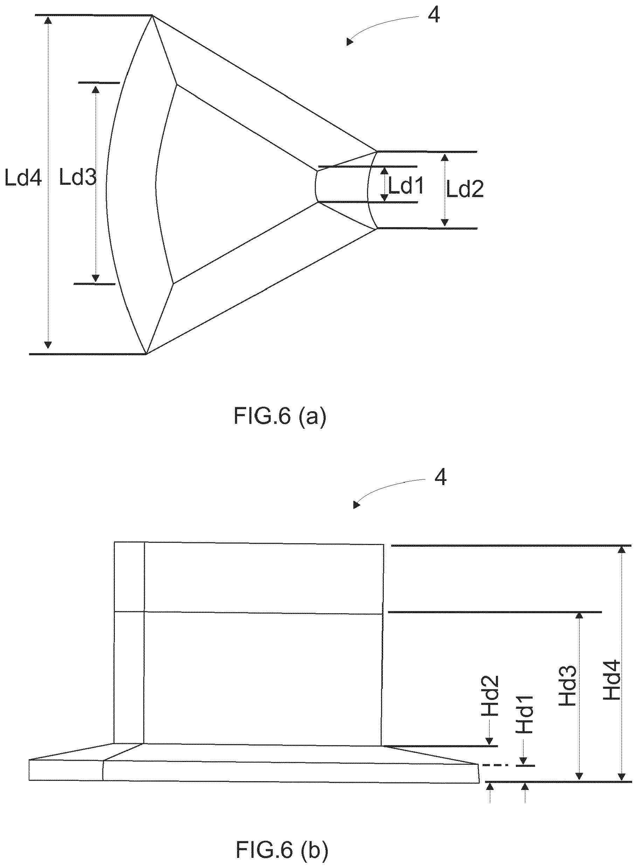

Furthermore, to provide a better description of this invention and particularly of its teeth (4, 40, 4', 40', 4"), in figure 6 (a) are presented the preferred dimensions for the widths Ld1, Ld3, Ld2 and Ld4 of the first and second curved faces (25) and (26), and the first and second circumference arcs (29) and (30), respectively. On the other hand, figure 6 (b) is a side view of tooth (4) showing heights of Hd1, Hd2, Hd3 and Hd4 for its surfaces.

However, these preferred values are no limitation of their widths from Ld1 to Ld4, or their heights from Hd1 to Hd4, shown in table 4 below:

**Table 4 - Preferred measures for teeth - Height and width**

| Dimensions of teeth (mm) | |
|---|---|
| Ld1 | 3.34 |
| Ld2 | 7.56 |
| Ld3 | 19.91 |
| Ld4 | 33.57 |
| Hd1 | 1.00 |
| Hd2 | 2.00 |
| Hd3 | 10.00 |
| Hd4 | 14.00 |

The material used to produce teeth (4, 40, 4', 40', 4") is a sinterized magnetic compound, such as the product commercially known as Somaloy or any other equivalent. The usage of this kind of material allows for different configurations for the teeth (4, 40, 4', 40', 4") of the electric motor (1). Furthermore, the sinterization process results in economic advantages and makes it easier to assemble motors (1) on the production line.

Considering the usage of the six teeth that form the electric motor (1), it follows that the total weight of the teeth (4, 40, 4', 40', 4") will be approximately 146g.

Figure 2 shows that the electric motor (1) proposed by this invention also has several copper coils (5, 50, 5', 50', 5" and 50"). These coils should be rolled around each tooth (4, 40, 4', 40', 4" and 40") respectively, this way the first and second curved faces (25) and (26), the first and second flat surfaces (23) and (24), are electrically linked to the first and second segments (31) and (32).

Preferably, the copper coils (5, 50, 5', 50', 5" and 50") should be rolled into loops of AWG gage wire, with an individual diameter of 0.85mm and a copper section of 0.515 mm². Furthermore, the electric resistance of each coil should be 64 mΩ.

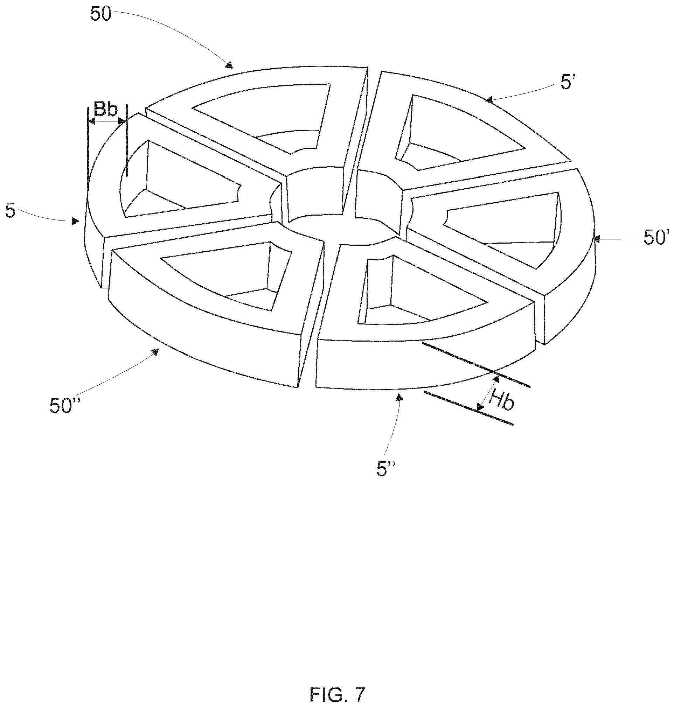

Figure 7 shows single coils (5, 50, 5', 50', 5" and 50"), highlighting the measures of the copper coils: Hb (height) and Bb (width). Preferably, such measures should be 5.00mm and 8.00mm respectively.

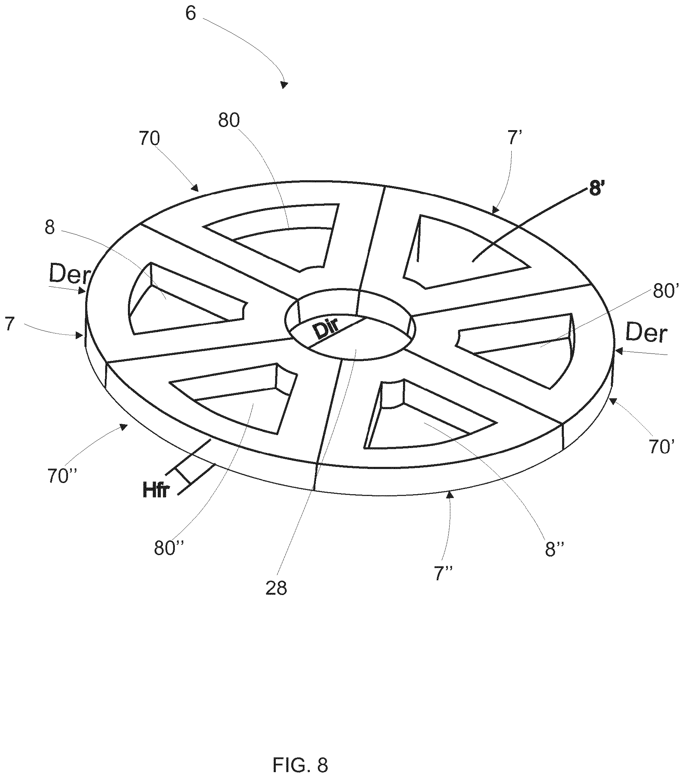

On the other hand, in figure 8 the rotor crown (6) is shown in detail. It should preferably, but not obligatorily, be produced with silicon iron or 1006 steel, the latter preferably in sheets to reduce its electric losses.

The rotor crown (6) may be produced as a single piece, or to make for easier assembling it may be divided into several sectors (7, 70, 7', 70', 7" and 70") shaped as segments of a circle. Obviously, the shown production of the electric motor (1) with six sectors is just the preferred configuration in this invention, and not a mandatory feature of it.

Regardless of the production of the rotor crown (6) being in sections or not, it may be seen in figure 8 with its several passing openings (8, 80, 8', 80', 8" and 80"), into which teeth (4, 40, 4', 40', 4" and 40") should be introduced respectively, electrically linked to the copper coils (5, 50, 5', 50', 5" and 50").

Furthermore, the rotor crown (6) should preferably have a circular shape, such that the central point of this circle is set as a circular bore (28) of diameter 'Dir'. It is also worth mentioning that the centre of the circular bore (28) serves as a reference for positioning the teeth (4, 40, 4', 40', 4" and 40").

Figure 8 shows the dimensions of the rotor crown (6), its Der (outer diameter), Dir (inner diameter) and Hfr (height). Preferably, such dimensions should be 74.00mm, 18.00mm and 4.00mm respectively.

The total weight of the electric motor (1) as described in this invention, may be obtained by adding the weights of the teeth (4, 40, 4', 40', 4" and 40"), the rotor crown (6), the coils (5, 50, 5', 50', 5" and 50"), the magnets (3, 3', 3" and 3"') and the stator crown (2).

Considering the use of the above-mentioned materials for the production of each of these parts as well as their dimensions, we would have a total weight for the whole motor of 145.38g (teeth) + 93.04g (rotor crown) + 52.73g (coils) + 212.63g. (magnets) + 289.52g. (stator crown), making a grand total of just 793.3g.

As for the height of the electric motor (1), that is to say the distance between the stator crown (2) and the rotor crown (6), it measures 40 millimetres. We therefore obtain an electric motor (1) which is extremely lightweight and compact and all together features technical, performance, production and assembling advantages compared to the known motors in the present state of the art.

Technically, the results in terms of efficiency and electric current consumption achieved in the performance tests for the electric motor (1) presented in this invention are as follows:

**Table 5 - Performance tests - electric motor of the present invention - axial flux**

| Performance tests - Electric motor- Present invention | | | | |
|---|---|---|---|---|
| Voltage (V) | Torque (N.m) | Electric current (A) | Rotation (rpm) | Efficiency (%) |
| 12 | 0.4 | 19.18 | 3600 | 62.1 |

It may be seen that the electric motor (1) presented by this invention registered a 62.1% efficiency, that is to say it is 14% more efficient compared to the efficiency value of known electric motors in the present state of the art with teeth produced using SAE 1006 steel. This efficiency value obtained with this motor may be considered very good, taking into account the dimensions of the presented motor.

Furthermore, in terms of electric current consumption, the motor (1) proposed by this invention has registered a 19.18 A. consumption as opposed to 22.53 A for present state of the art electric motors.

Obviously, a lower electric current consumption associated with a higher efficiency and reduced dimensions and weight result in an electric motor (1) that allows for an almost ideal performance in the system to which it is applied, in this case an air conditioning system for vehicles.

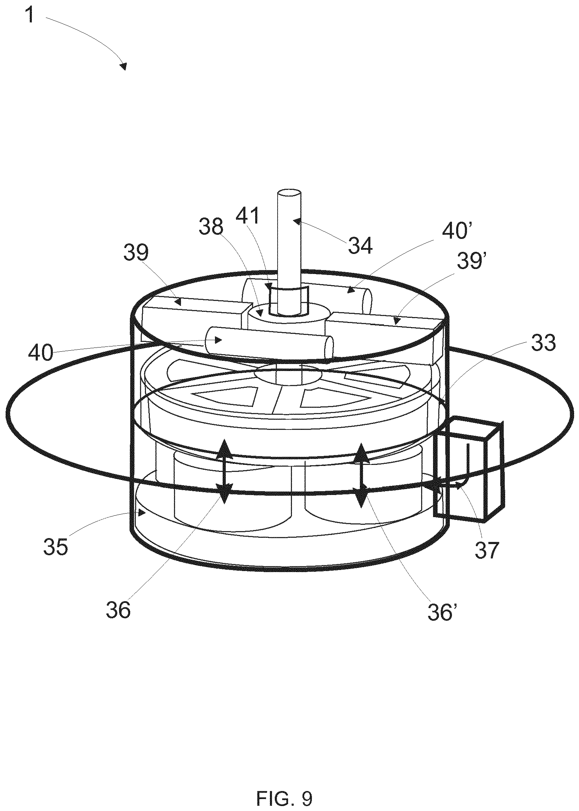

Figure 9 shows our electric motor (1) with a detailed projection of the supporting parts of the motor, such as the support for the rotor crown (33) and the support for the stator crown (35). The rotor assembly support (33) is linked to the shaft (34) of the motor (1), whereas the stator support (35) is linked to the stator crown (2).

Arrows (36) and (36') show the magnetic flux direction of this electric motor (1). It may be seen that such passage is parallel to the motor shaft and, in this way, associated with the layout of the elements that are part of the electric motor (1), makes the motor achieve more efficiency. On the other hand, arrow (37) shows the air passage through the electric motor (1) gap.

Furthermore, figure 9 shows the switch (38) - responsible for guaranteeing that, regardless of the position of the motor and more specifically of its rotor assembly, the electric current flux in the motor always remains the same - as well as the brushes (39) and (39'), and the chokes (40) and (40'), the latter is responsible for preventing any radio frequency interference being generated by the electric motor (1). Finally, figure 9 shows the projection of the bushing (41) used for providing for correct clamping of the shaft (34).

The electric motor (1) proposed in this invention also has means for commutating the coils in a way that is capable of leading to further reductions in the ripple values (direct current voltage variation) of the induced motor voltage. As is known, for a DC motor, the lower the ripple values, the better the performance of the motor.

As already mentioned, this electric motor (1) has a winding made of coils (5, 50, 5', 50', 5" and 50"), each of them rolled around one of the teeth (4, 40, 4', 40', 4" and 40") of the motor.

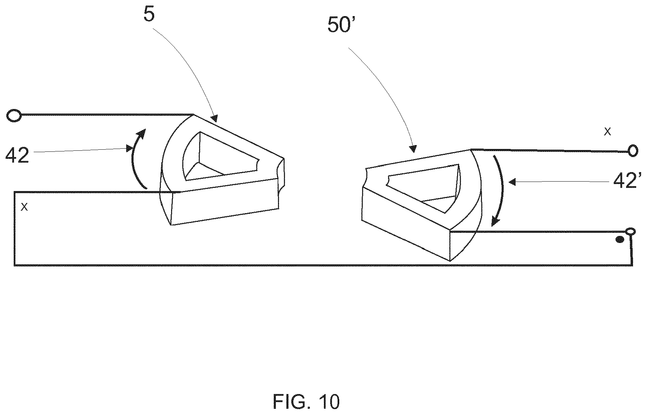

Furthermore, the six coils of the motor are divided into three groups of two coils each; each group is formed by coils in a diametrically opposed position, and the two coils of each group are wound in the same direction, as can be better seen in figure 10, which shows coils (5) and (50') that form the winding (called the A winding) of the electric motor (1).

The direction of the winding is shown by arrows (42) and (42'). In a similar manner, coils (50) and (5") form the second winding (winding B), and coils (5') and (50") the third winding (winding C).

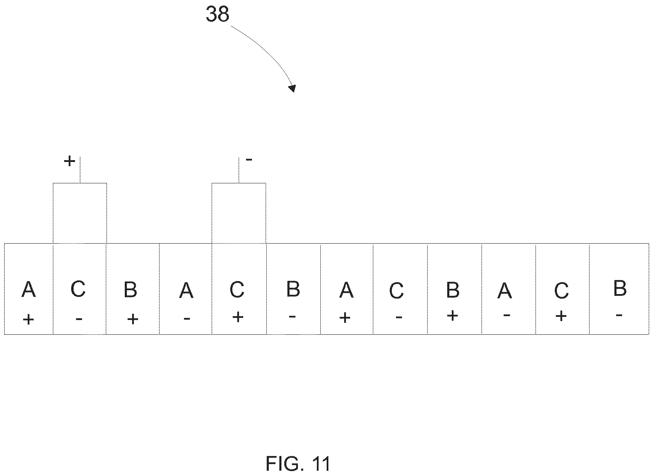

With the purpose of reducing the ripple values of the induced voltage in the windings of the electric motor (1), the switch (38) used is preferably a switch with a ring of 12 blades and equipped with sequential connexions such as those shown in figure 11.

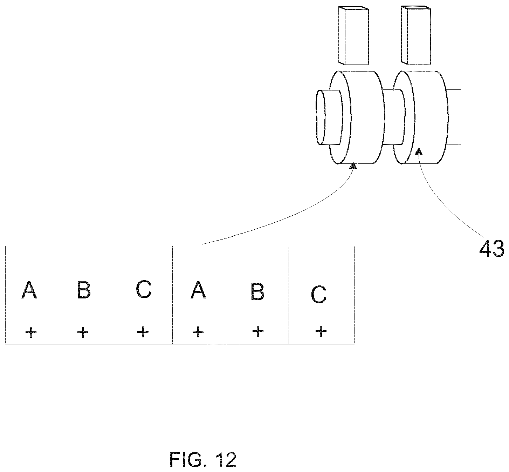

Alternatively, a switch made of two rings could also be used. In such case, the first ring should be made of 6 blades and equipped with sequential connexions to terminals (A, B, C, A, B, C). On the other hand, the second ring should be connected to a common terminal (43) between the windings. This configuration may be better seen in figure 12.

However, it is worth mentioning that the use of a switch with two rings leads to an induced voltage with higher levels of ripple compared with the use of a switch with one ring of 12 blades. This is due to the fact that, when utilizing a switch with a ring of 12 blades, the negative semi cycles of the voltages in each winding will bounce, thus enhancing the electric motor efficiency.

In an additional configuration of this present invention, the radial position of the teeth of the motor (4, 40, 4', 40', 4" and 40"), as well as the position of the magnets (3, 3', 3" and 3"') could be changed, increased or decreased. For instance, for a Dr value of 2 to 20mm, could be added the inner and outer radiuses of the rotor crown (6), as well as the value of Rd2. Such a change will cause changes in the ripple of the motor, as well as in its efficiency. In this way, an optimum point between the radial position of the teeth (4, 40, 4', 40', 4" and 40") and the magnetic part of the magnets (3, 3', 3" and 3")' in relation to efficiency values and ripple can be obtained.

Considering that a preferred implementation has been described, it should be understood that the purpose of the present invention includes other possible variations, its only limit being the content of the attached claims, and of any possible equivalents.

## Claims

1. Electric motor (1) of axial magnetic flux, this electric motor contains at least:
a stator crown (2) that defines one contact surface (13),
several magnets (3, 3', 3", 3"') associated with the contact surface (13) of the stator crown (2),
wherein this electric motor (1) also includes a rotor crown (6) that has several passing openings (8, 80, 8', 80', 8" and 80"), and
this electric motor (1) also contains several teeth (4, 40, 4', 40', 4", 40") individually positioned in each of the passing openings (8, 80, 8', 80', 8" and 80") and each one has at least one of its surfaces (21, 22, 23, 24, 25, 26) electrically associated with at least one copper coil (5, 50, 5', 50', 5", 50"),
wherein said several teeth (4, 40, 4', 40', 4", 40") are shaped to fit the passing opening (8, 80, 8', 80', 8" and 80"), wherein the rotor crown (6) is formed by several separate sectors (7, 70, 7', 70', 7", 70") shaped as segments of a circle,
wherein each sector (7, 70, 7', 70', 7", 70") is provided with one of said passing openings (8, 80, 8', 80', 8" and 80"),
wherein
each tooth (4, 40, 4', 40', 4", 40") has a body (19) extending into one of said passing openings (8, 80, 8', 80', 8" and 80") of said sectors (7, 70, 7', 70', 7", 70"), wherein each sector (7, 70, 7', 70', 7", 70") is shaped in such a manner as to fit properly to one of the copper coils (5, 50, 5', 50', 5", 50"),
wherein
each tooth (4, 40, 4', 40', 4", 40") extends with its body (19) through one of said copper coils (5, 50, 5', 50', 5", 50") into one of said passing openings (8, 80, 8', 80', 8" and 80") of said sectors (7, 70, 7', 70', 7", 70"),
wherein the body (19) of each tooth (4, 40, 4', 40', 4", 40") defines a first surface (21) and a second surface (22), in such a manner that at least one of the first and second surfaces (21, 22) faces several of the magnets (3, 3', 3" and 3"'),
wherein the body (19) also defines a height (H) and has a first and second flat surface (23, 24) that are concurrent to one another, wherein each of the first and the second flat surfaces (23, 24) extend radially and axially, and are joined by a first radially inner curved face (25) and a second radially outer curved face (26) substantially positioned on opposite sides, wherein at the body (19) of each tooth (4, 40, 4', 40', 4", 40") the radially inner curved face (25) and the radially outer curved face (26) are concave towards a rotational axis of the electric motor (1), wherein each copper coil (5, 50, 5', 50', 5", 50") is shaped as a segment of a circle and comprises analogous to the respective tooth (4, 40, 4', 40', 4", 40") a radially inner curved face and a radially outer curved face both being concave towards said rotational axis of the electric motor (1).

2. Electric motor (1) according to claim 1, **characterized in that** the stator crown (2) is shaped in a preferably circular manner with a diameter measuring between 70 millimetres and 110 millimetres.

3. Electric motor (1) according to at least one of the preceeding claims, **characterized in that** the electric motor (1) is used in an air conditioning system for vehicles.

4. Electric motor (1) according to at least one of the preceeding claims, **characterized in that** the first or second surface (21, 22) facing the magnets (3, 3', 3" and 3"') extends laterally from the respective body (19) and is arranged axially between the respective copper coil (5, 50, 5', 50', 5", 50") and the respective magnet (3, 3', 3" and 3"').

5. Electric Motor (1) according to at least one of the preceding claims, **characterized in that** the number of teeth (4, 40, 4', 40', 4", 40") is bigger than the number of magnets (3, 3', 3" and 3"').

6. Electric motor (1) of axial magnetic flux as set forth in claim 5, **characterized in that** from the first curved face (25) and the second curved face (26) there are projected a first circumference arc (29) of radius (Rd1) and a second circumference arc (30) of radius (Rd4), in such a manner that the first and second circumference arcs (29, 30) are joined together by a first segment (31) and a second segment (32).

7. Electric motor (1), in particular according to at least one of the preceeding claims, to be used in cooling systems for vehicles and equipped with axial magnetic flux; and such electric motor (1) is **characterized by** the fact that its height is less than 50 millimetres and that it has a stator crown (2) of a diameter between 75 and 110 millimetres.

8. Electric motor (1) to be used in cooling systems for vehicles and equipped with axial magnetic flux as set forth in claim 7, such electric motor is **characterized in that** it has several teeth (4, 40, 4', 40', 4", 40") produced by a sinterization process, cut by laser and embossed.

9. Electric motor (1) to be used in cooling systems for vehicles and equipped with axial magnetic flux as set forth in claim 7 or 8; such electric motor (1) is **characterized in that** it weighs less than 800g.

## Patentansprüche

1. Elektromotor (1) mit axialem magnetischen Fluss, wobei der Elektromotor enthält:
mindestens einen Statorkranz (2), der eine Kontaktfläche (13) definiert,
verschiedene Magnete (3, 3', 3", 3"'), die mit der Kontaktfläche (13) dem Statorkranz (2) verbunden sind,
wobei der Elektromotor (1) auch einen Rotorkranz (6) aufweist, der mehrere Durchgangsöffnungen (8, 80, 8', 80', 8" und 80") hat, und
der Elektromotor (1) auch mehrere Zähne (4, 40, 4', 40', 4", 40") enthält, die individuell in jeder der Durchgangsöffnungen (8, 80, 8', 80', 8" und 80") positioniert sind und jeder mindestens eine seiner Flächen (21, 22, 23, 24, 25, 26) mit mindestens einer Kupferspule (5, 50, 5', 50', 5", 50") elektrisch verbunden hat,
wobei die mehreren Zähne (4, 40, 4', 40', 4", 40") so geformt sind, dass sie in die Durchgangsöffnung (8, 80, 8', 80', 8"und 80") passen,
wobei der Rotorkranz (6) mit mehreren getrennten Sektoren (7, 70, 7', 70', 7", 70") gebildet ist, die als Segmente eines Kreises geformt sind,
wobei jeder Sektor (7, 70, 7', 70', 7'', 70") mit einer der Durchgangsöffnungen (8, 80, 8', 80', 8" und 80") versehen ist,
wobei jeder Zahn (4, 40, 4', 40', 4", 40") einen Körper (19) hat, der sich in eine der Durchgangsöffnungen (8, 80, 8', 80', 8"und 80") der Sektoren (7, 70, 7', 70', 7", 70") erstreckt,
wobei jeder Sektor (7, 70, 7', 70', 7", 70") auf eine Weise geformt ist, dass er genau auf eine der Kupferspulen (5, 50, 5', 50', 5", 50") passt,
wobei sich jeder Zahn (4, 40, 4', 40', 4", 40") mit seinem Körper (19) durch eine der Kupferspulen (5, 50, 5', 50', 5", 50") in eine der Durchgangsöffnungen (8, 80, 8', 80', 8"und 80") der Sektoren (7, 70, 7', 70', 7", 70") erstreckt,
wobei der Körper (19) jedes Zahnes (4, 40, 4', 40', 4", 40") eine erste Fläche (21) und eine zweite Fläche (22) auf eine Weise definiert, dass mindestens eine von der ersten und der zweiten Fläche (21, 22) mehreren der Magnete (3, 3', 3" und 3"') gegenübersteht,
wobei der Körper (19) auch eine Höhe (H) definiert und eine erste und eine zweite ebene Fläche (23, 24) hat, die sich zueinander entsprechen, wobei sich jede von der ersten und der zweiten ebenen Fläche (23, 24) radial und axial erstreckt und durch eine erste radial innere gekrümmt Fläche (25) und eine zweite radial äußere gekrümmte Fläche (26) verbunden sind, die im Wesentlichen auf gegenüberliegenden Seiten angeordnet sind,
wobei an dem Körper (19) jedes Zahnes (4, 40, 4', 40', 4", 40") die radial innere gekrümmte Fläche (25) und die radial äußere gekrümmte Fläche (26) zu einer Drehachse des Elektromotors (1) hin konkav sind,
wobei jede Kupferspule (5, 50, 5', 50', 5", 50") als Segment eines Kreises geformt ist und analog zu dem jeweiligen Zahn (4, 40, 4', 40', 4" 40") eine radial innere gekrümmte Fläche und eine radial äußere gekrümmte Fläche aufweist, die beide zur Drehachse des Elektromotors (1) hin konkav sind.

2. Elektromotor (1) nach Anspruch 1, **dadurch gekennzeichnet, dass** der Statorkranz (2) vorzugsweise kreisförmig, mit einem Durchmesser zwischen 70 Millimetern und 110 Millimetern, geformt ist.

3. Elektromotor (1) nach mindestens einem der vorhergehenden Ansprüche, **dadurch gekennzeichnet, dass** der Elektromotor (1) in einer Klimaanlage für Fahrzeuge verwendet wird.

4. Elektromotor (1) nach mindestens einem der vorhergehenden Ansprüche, **dadurch gekennzeichnet, dass** die erste oder die zweite Fläche (21, 22), die den Magneten (3, 3', 3"und 3"') gegenübersteht, sich lateral von dem jeweiligen Körper (19) erstreckt und axial zwischen der jeweiligen Kupferspule (5, 50, 5', 50', 5", 50") und dem jeweiligen Magneten (3, 3', 3"und 3"') angeordnet ist.

5. Elektromotor (1) nach mindestens einem der vorhergehenden Ansprüche, **dadurch gekennzeichnet, dass** die Anzahl der Zähne (4, 40, 4', 40', 4", 40") größer ist als die Anzahl der Magnete (3, 3', 3"und 3"').

6. Elektromotor (1) mit axialem magnetischen Fluss nach Anspruch 5, **dadurch gekennzeichnet, dass** von der ersten gekrümmten Fläche (25) und der zweiten gekrümmten Fläche (26) ein erster Umfangsbogen (29) des Radius (Rd1) und ein zweiter Umfangsbogen (30) des Radius (Rd4) herausragt in einer Weise, dass der erste und der zweite Umfangsbogen (29, 30) durch ein erstes Segment (31) und ein zweites Segment (32) miteinander verbunden sind.

7. Elektromotor (1), insbesondere nach mindestens einem der vorstehenden Ansprüche, zur Verwendung in Kühlsystemen für Fahrzeuge und ausgestattet mit axialem magnetischen Fluss; und wobei ein solcher Elektromotor (1) durch die Tatsache gekennzeichnet ist, dass seine Höhe weniger als 50 Millimeter beträgt und dass er einen Statorkranz (2) mit einem Durchmesser zwischen 75 und 110 Millimeter hat.

8. Elektromotor (1) zur Verwendung in Kühlsystemen für Fahrzeuge und ausgestattet mit axialem magnetischen Fluss nach Anspruch 7, wobei ein solcher Elektromotor **dadurch gekennzeichnet ist, dass** er mehrere Zähne (4, 40, 4', 40', 40' 4", 40") hat, die durch einen Sinterprozess hergestellt, durch Laser geschnitten und geprägt sind.

9. Elektromotor (1), zur Verwendung in Kühlsystemen für Fahrzeuge und ausgestattet mit axialem magnetischen Fluss nach Anspruch 7 oder 8; wobei ein solcher Elektromotor **dadurch gekennzeichnet ist, dass** er weniger als 800 g wiegt.

## Revendications

1. Moteur électrique (1) de flux magnétique axial, ce moteur électrique contient au moins:
une couronne de stator (2) qui définit une surface de contact (13),
plusieurs aimants (3, 3', 3", 3"') associés à la surface de contact (13) de la couronne de stator (2),
dans lequel ce moteur électrique (1) inclut également une couronne de rotor (6) qui présente plusieurs ouvertures de passage (8, 80, 8', 80', 8" et 80"), et
ce moteur électrique (1) contient également plusieurs dents (4, 40, 4', 40', 4", 40") positionnées individuellement dans chacune des ouvertures de passage (8, 80, 8', 80', 8" et 80") et chacune présente au moins une de ses surfaces (21, 22, 23, 24, 25, 26) associées électriquement à au moins une bobine de cuivre (5, 50, 5', 50', 5", 50"),
dans lequel lesdites plusieurs dents (4, 40, 4', 40', 4", 40") sont formées pour s'insérer dans l'ouverture de passage (8, 80, 8', 80', 8" et 80"),
dans lequel la couronne de rotor (6) est formée par plusieurs secteurs séparés (7, 70, 7', 70', 7", 70") formés comme segments d'un cercle,
dans lequel chaque secteur (7, 70, 7', 70', 7", 70") est doté d'une desdites ouvertures de passage (8, 80, 8', 80', 8" et 80"),
dans lequel
chaque dent (4, 40, 4', 40', 4", 40") présente un corps (19) s'étendant dans une desdites ouvertures de passage (8, 80, 8', 80', 8" et 80") desdits secteurs (7, 70, 7', 70', 7", 70"),
dans lequel chaque secteur (7, 70, 7', 70', 7", 70") est formé de manière à s'insérer correctement dans l'une des bobines de cuivre (5, 50, 5', 50', 5", 50"),
dans lequel
chaque dent (4, 40, 4', 40', 4", 40") s'étend avec son corps (19) au travers d'une desdites bobines de cuivre (5, 50, 5', 50', 5", 50") dans une desdites ouvertures de passage (8, 80, 8', 80', 8" et 80") desdits secteurs (7, 70, 7', 70', 7", 70"),
dans lequel le corps (19) de chaque dent (4, 40, 4', 40', 4", 40") définit une première surface (21) et une seconde surface (22), de telle manière qu'au moins une de la première et seconde surface (21, 22) fasse face à plusieurs des aimants (3, 3', 3" et 3'"),
dans lequel le corps (19) définit également une hauteur (H) et présente une première et une seconde surface (23, 24) plate qui sont concourantes l'une à l'autre, dans lequel chacune des première et seconde surfaces plates (23, 24) s'étend radialement et axialement, et sont jointes par une première face courbée radialement intérieure (25) et une seconde face courbée radialement extérieure (26) sensiblement positionnées sur des côtés opposés,
dans lequel sur le corps (19) de chaque dent (4, 40, 4', 40', 4", 40"), la face courbée radialement intérieure (25) et la face courbée radialement extérieure (26) sont concaves vers un axe de rotation du moteur électrique (1),
dans lequel chaque bobine de cuivre (5, 50, 5', 50', 5", 50") est formée comme un segment d'un cercle et comprend de manière analogue à la dent respective (4, 40, 4', 40', 4", 40") une face courbée radialement intérieure et une face courbée radialement extérieure qui sont toutes deux concaves vers ledit axe de rotation du moteur électrique (1).

2. Moteur électrique (1) selon la revendication 1, **caractérisé en ce que** la couronne de stator (2) est formée de manière circulaire de préférence avec un diamètre mesurant entre 70 millimètres et 110 millimètres.

3. Moteur électrique (1) selon au moins une des revendications précédentes, **caractérisé en ce que** le moteur électrique (1) est utilisé dans un système de climatisation pour des véhicules.

4. Moteur électrique (1) selon au moins l'un des revendications précédentes, **caractérisé en ce que** la première ou seconde surface (21, 22) faisant face aux aimants (3, 3', 3" et 3"') s'étend latéralement depuis le corps respectif (19) et est agencée axialement entre la bobine de cuivre respective (5, 50, 5', 50', 5", 50") et l'aimant respectif (3, 3', 3" et 3"').

5. Moteur électrique (1) selon au moins l'une des revendications précédentes, **caractérisé en ce que** le nombre de dents (4, 40, 4', 40', 4", 40") est supérieur au nombre d'aimants (3, 3', 3" et 3'').

6. Moteur électrique (1) de flux magnétique axial selon la revendication 5, **caractérisé en ce que** depuis la première face courbée (25) et la seconde face courbée (26), sont projetés un premier arc de circonférence (29) de rayon (Rd1) et un second arc de circonférence (30) de rayon (Rd4), de telle manière que les premier et second arcs de circonférence (29, 30) sont joints ensemble par un premier segment (31) et un second segment (32).

7. Moteur électrique (1), en particulier selon au moins une des revendications précédentes, à utiliser dans des systèmes de refroidissement pour des véhicules et à équiper de flux magnétique axial ; et un tel moteur électrique (1) est **caractérisé par le fait que** sa hauteur est inférieure à 50 millimètres et qu'il a une couronne de stator (2) d'un diamètre entre 75 et 110 millimètres.

8. Moteur électrique (1) à utiliser dans des systèmes de refroidissement pour des véhicules et à équiper de flux magnétique axial selon la revendication 7, un tel moteur électrique est **caractérisé en ce qu'**il présente plusieurs dents (4, 40, 4', 40', 4", 40") produites par un processus de frittage, coupées par laser et embossées.

9. Moteur électrique (1) à utiliser dans des systèmes de refroidissement pour des véhicules et à équiper de flux magnétique axial selon la revendication 7 ou 8 ; un tel moteur électrique (1) est **caractérisé en ce qu'**il pèse moins de 800 g.
